Europäisches Patentamt

European Patent Office

Office européen des brevets

(19)

(11) Numéro de publication : **0 318 391 B1**

(12) # FASCICULE DE BREVET EUROPEEN

(45) Date de publication du fascicule du brevet :
17.07.91 Bulletin 91/29

(51) Int. Cl.⁵ : **A01B 3/46, A01B 15/14**

(21) Numéro de dépôt : 88402966.1

(22) Date de dépôt : 24.11.88

(54) **Perfectionnement aux charrues réversibles semi-portées et de grande longueur.**

(30) Priorité : 26.11.87 FR 8716607

(43) Date de publication de la demande :
31.05.89 Bulletin 89/22

(45) Mention de la délivrance du brevet :
17.07.91 Bulletin 91/29

(84) Etats contractants désignés :
BE DE ES FR GB

(56) Documents cités :
EP-A- 0 297 969
FR-A- 2 201 022
FR-A- 2 244 393
FR-A- 2 310 686
US-A- 4 049 063
US-A- 4 266 618
US-A- 4 271 913

(73) Titulaire : CHARRUES NAUD Société Anonyme
dite:
Route Départementale 752 Andreze
F-49600 Beaupreau (FR)

(72) Inventeur : Naud, Pierre
La Joussalmière Andreze
F-49600 Beaupreau (FR)

(74) Mandataire : Phélip, Bruno et al
c/o Cabinet Harlé & Phélip 21, rue de La
Rochefoucauld
F-75009 Paris (FR)

## Description

La présente invention concerne un perfectionnement aux charrues de grande longueur et en particulier aux charrues du type semi-portées, c'est-à-dire soutenues à l'avant par le système de relevage du tracteur et, à l'arrière, par une ou deux roues selon le cas.

Les charrues de grande longueur, qui comportent un grand nombre de socs, s'accommodent très mal des terrains ondés, même légèrement. En effet la moindre bosse ou creux provoque, d'une part, des variations dans le terrage ou profondeur de fouille, au niveau des socs, et, surtout, d'autre part, des variations d'efforts sur le bâti support des différents socs.

Il est connu, pour des charrues de labour en planches à plusieurs socs, comme décrit par exemple dans le document FR-A-2 244 393, de disposer les socs sur deux cadres réunis entre eux au moyen d'une articulation horizontale et perpendiculaire au sens d'avancement. Ce montage en tandem permet de s'affranchir des problèmes liés aux sols irréguliers.

Les charrues pour labour en planches sont des charrues que l'on peut qualifier de simples. Elles ne comportent, sur le cadre, qu'une seule série de socs qui travaillent en permanence. Les charrues réversibles comportent deux séries de socs disposées de part et d'autre du cadre ; chaque série de socs travaille alternativement.

L'invention a pour objet de perfectionner ces charrues, et en particulier lorsqu'elles sont de grande longueur, de façon à leur permettre de mieux s'accommoder des irrégularités du sol et ceci pour chaque série de socs disposée sur le cadre ou bâti de la charrue.

On remarque aussi, sur le document précité, que le fait d'avoir une articulation entre deux cadres constitutifs de la charrue, nécessite des moyens complémentaires d'assujettissement de ces deux cadres pour permettre le transport de la charrue. Ces moyens complémentaires, comme décrit aussi par exemple, dans le document FR-A-2 201 022, ne sont pas toujours désirables et compliquent la charrue.

L'invention permet encore, en même temps que l'adaptation aux irrégularités du sol, un maintien global de l'ensemble de la charrue pour son transport sans nécessiter des dispositifs complémentaires complexes et coûteux.

L'invention permet également de mieux répartir les efforts sur l'attelage du tracteur et sur la roue ou l'essieu porteur, et donc d'améliorer sensiblement l'adhérence au niveau du tracteur.

L'invention permet encore d'optimiser la résistance du bâti support des socs, et par là de gagner notamment du poids tant sur le bâti que sur le chariot support. Le bâti support des socs est en effet moins sollicité ; les efforts sont beaucoup plus réguliers.

La charrue selon l'invention est une charrue semi-portée réversible dont le bâti se situe dans le plan médian passant par l'axe de retournement, et supporte, de part et d'autre de ce plan médian, plusieurs socs répartis sur une grande longueur ; le bâti est constitué de deux tronçons : — un tronçon avant disposé entre le système d'attelage du tracteur et un chariot support, — un tronçon arrière disposé au-delà dudit chariot ; ce tronçon arrière est soutenu par le tronçon avant au moyen d'un dispositif d'articulation; en position normale de travail, ce dispositif d'articulation confère un degré de liberté audit tronçon arrière par rapport audit tronçon avant, de façon à conserver un terrage similaire pour l'ensemble des socs quelles que soient les ondes du terrain ; il confère un degré de liberté dans un plan parallèle à celui des contreceps de la charrue. Ce dispositif d'articulation est constitué d'un axe qui est perpendiculaire au sens d'avancement de la charrue lorsqu'elle est en position normale de travail, et qui est situé à l'intersection des plans médians des tronçons avant et arrière. Cette charrue comporte un système de rappel élastique qui est interposé entre les deux tronçons avant et arrière et qui tend à maintenir ce dernier dans l'alignement du tronçon avant, dans le plan médian du bâti.

Ce système de rappel élastique est constitué d'organe disposés de préférence symétriquement de part et d'autre de l'axe d'articulation qui réunit le tronçon arrière et le tronçon avant, c'est-à-dire de part et d'autre du plan médian de la charrue et de l'axe d'articulation, au-dessus et en-dessous de ce dernier lorsque la charrue est en position normale de travail. Ces organes sont de préférence des plots en matériau du genre caoutchouc, élastomère ou similaire.

Selon une autre disposition de l'invention, le système de rappel élastique comporte des moyens de réglage qui permettent d'ajuster la dureté ou résistance des plots, selon la nature du sol par exemple.

Toujours selon l'invention, les plots élastiques sont disposés par paires, de part et d'autre de l'axe d'articulation ; ils sont partiellement enfermés dans des fourreaux cylindriques de guidage.

L'invention sera mieux comprise à l'aide de la description suivante et des dessins annexés donnés à titre indicatif, et dans lesquels :

— la figure 1 montre une charrue selon l'invention, en évolution sur un terrain ondé ;

— la figure 2 est une vue de dessus partielle de la charrue en position normale de travail ;

— la figure 3 est une vue latérale agrandie du dispositif d'articulation de la charrue, avec une coupe partielle selon 3 ;

— la figure 4 est une vue de dessus de ce même dispositif d'articulation, lorsque la charrue est en position normale de travail.

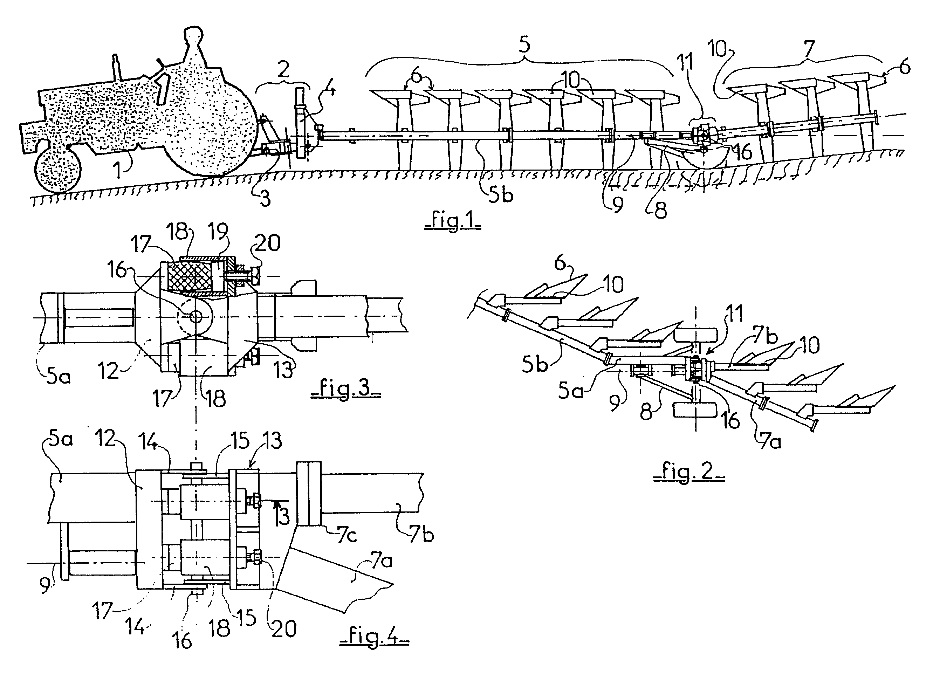

La charrue représentée figure 1, est une charrue du type semi-portée réversible tirée par un tracteur 1. Cette charrue comporte une tête d'attelage 2, laquelle est constituée d'une potence 3 et d'un dispositif de retournement 4 qui est soutenu par ladite potence 3.

Le bâti de la charrue est divisé en un tronçon avant 5, supportant, tel que représenté figure 1, six paires de socs 6 et un tronçon arrière 7 supportant trois paires de socs 6.

Dans le mode de réalisation représenté figures 1 et 2, la partie arrière du tronçon avant 5 est aménagée pour recevoir un chariot 8 ; ce chariot supporte la charrue ; il est disposé sensiblement aux deux tiers de sa longueur et il est principalement articulé, par rapport au tronçon 5 du bâti, selon un axe 9 disposé dans le plan médian de la charrue et de façon parallèle au contrecep 10 des socs 6. Le retournement de la charrue s'effectue en appui sur cet axe 9 du chariot 8. Des moyens, non représentés, interposés entre l'essieu du chariot et l'axe 9, permettent de faire varier la hauteur du bâti de la charrue par rapport audit chariot.

Les tronçons 5 et 7 sont séparés par un dispositif d'articulation 11 qui permet un certain degré de liberté du tronçon arrière 7 par rapport au tronçon avant 5 de façon à mieux épouser les ondes du terrain. De ce fait, l'ensemble des socs 6 de la charrue conserve un meilleur terrage. Les efforts qui s'exercent sur le chariot 8 sont sensiblement diminués et les efforts de traction restent sensiblement constants. La charrue a tendance à se comporter comme se comporteraient deux charrues pratiquement indépendantes ; le tracteur conserve ainsi une plus grande efficacité au niveau de l'adhérence, équivalente à celle rencontrée pour une charrue semi-portée de moindre longueur. Par ailleurs, ce dispositif d'articulation 11 ne porte pas préjudice aux systèmes de sécurité classique "NON-STOP", que pourrait comporter de façon individuelle chaque paire de socs.

Le dispositif d'articulation 11 est constitué, figures 3 et 4, d'une première platine 12 solidaire du bâti intermédiaire 5a du tronçon 5. Ce bâti 5a, figure 2, supporte le chariot 8, il est disposé de façon parallèle à l'axe 9 dudit chariot 8, dans le prolongement du bâti avant 5b sur lequel sont montés les socs 6. Une seconde platine 13 est solidaire du bâti arrière 7a du tronçon arrière 7 ; elle supporte également directement un age 7b par l'intermédiaire d'une liaison 7c du type "NON-STOP" par exemple. Les platines 12 et 13 sont parallèles entre elles et sont sensiblement perpendiculaires à la portion intermédiaire 5a du bâti. La platine 12 forme une première chape avec les oreilles latérales 14 qui s'étendent vers l'arrière de la charrue; la platine 13 forme une seconde chape avec les oreilles 15 qui s'étendent vers l'avant de la charrue ; ces deux chapes sont réunies par un axe 16 disposé sensiblement dans le plan médian du bâti support des corps de labour, perpendiculaire au sens d'avancement de la charrue lorsqu'elle est en position normale de travail.

Le dispositif d'articulation 11 offre un degré de liberté du tronçon arrière 7 par rapport au tronçon avant 5. Ce degré de liberté se limite à un mouvement de pivotement du tronçon arrière 7 autour du seul axe 16. Ce tronçon arrière se situe en porte à faux derrière le chariot 8, soutenu de façon élastique, lorsque la charrue est en position de travail.

Un système de rappel élastique est interposé entre les deux platines 12 et 13. Ce système de rappel élastique est principalement constitué d'organes en forme de plots élastiques 17 disposés symétriquement de part et d'autre de l'axe 16. Ces plots 17 sont en matériau du genre caoutchouc, de forme cylindrique, disposés par paires de part et d'autre de l'axe d'articulation 16. Ces plots 17 sont guidés et renfermés pour partie dans des fourreaux cylindriques 18. Ces fourreaux comportent aussi des moyens de réglage permettant d'ajuster la dureté ou résistance des plots 17. Ces moyens de réglage sont constitués de poussoirs 19 qui coulissent à l'intérieur des fourreaux 18 et dont la position est réglée au moyen des vis de manoeuvre 20 traversant la platine arrière 13.

A titre indicatif, on peut prévoir un débattement du tronçon arrière 7 dans un rapport de 1 à 10 par rapport à l'écrasement des plots élastiques. Ainsi pour un écrasement de 1 cm par exemple, le dernier soc 6 de la charrue peut se trouver à 10 cm au-dessus ou au-dessous de sa position normale sans préjudice sur son propre mouvement qui peut résulter de la présence d'une pierre, dans le cas d'une charrue équipée de système d'éclipsage automatique classique du type "NON-STOP".

En position normale de transport, le tronçon arrière 7 est porté rigidement par l'axe 16, maintenu latéralement par le système de rappel élastique et en particulier par les plots 17. Dans cette position transport, l'axe 16 se situe dans un plan vertical qui n'est autre que le plan médian de la charrue, basculé de 90° par rapport à sa position lorsque la charrue est en position normale de travail. On peut également prévoir un verrouillage par une goupille non représentée, interposée par exemple entre les oreilles 14 et 15 des chapes de liaison des deux tronçons 5 et 7, pour rigidifier totalement le bâti, c'est-à-dire les tronçons 5 et 7.

En résumé, l'articulation 11 procure, en coopération avec les moyens de rappel élastique, une liaison souple entre le tronçon avant 5 et le tronçon arrière 7 lorsque la charrue est en position normale de travail et une liaison rigide lorsque la charrue est en position de transport.

L'invention ne se limite pas, bien entendu, à l'exemple de réalisation décrit, c'est ainsi que l'on peut prévoir de remplacer les plots élastomères 17 par d'autres formes d'organes élastiques comme par exemple des ressorts hélicoïdaux interposés de la même façon entre les platines 12 et 13.

Les signes de référence insérés après les caractéristiques techniques mentionnées dans les revendications ont pour seul but de faciliter la compréhension de ces dernières, et n'en limitent aucunement la portée.

## Revendications

1. Charrue semi-portée, de grande longueur comportant un bâti longitudinal constitué de deux tronçons : d'une part, un tronçon avant (5) disposé entre le système d'attelage (2) de la charrue sur le tracteur et un chariot (8) et, d'autre part, un tronçon arrière (7) disposé au-delà dudit chariot (8), ledit tronçon arrière (7) étant soutenu par le tronçon avant (5) au moyen d'un dispositif d'articulation (11) constitué d'un axe (16) qui est perpendiculaire au sens d'avancement de la charrue lorsqu'elle est en position normale de travail, et un système de rappel élastique étant interposé entre les tronçons avant (5) et arrière (7), caractériséé en ce que la charrue est réversible, l'axe est situé à l'intersection des plans médians des tronçons avant et arrière et le système de rappel est constitué d'organes (17) disposés de part et d'autre de ladite intersection comportant l'axe d'articulation (16), au-dessus et en-dessous de ce dernier lorsque la charrue est en position normale de travail, lequel système de rappel tend à maintenir ledit tronçon arrière (7) dans l'alignement dudit tronçon avant (5), tout en laissant, en position normale de travail, un degré de liberté audit tronçon arrière (7), dans un plan vertical, par rapport audit tronçon avant (5), de façon à conserver un terrage similaire pour l'ensemble des socs (6), quelles que soient les ondes du terrain.

2. Charrue semi-portée réversible selon la revendication 1, caractérisée en ce que les organes de rappel (17) sont des plots en matériau du genre caoutchouc, élastomère.

3. Charrue semi-portée réversible selon l'une quelconque des revendications 1 ou 2, caractérisée en ce qu'elle comporte des organes de rappel (17) interposés entre deux platines (12) et (13) solidaires respectivement du tronçon avant (5) et du tronçon arrière (7), lesquels organes de rappel (17) sont partiellement enserrés dans des fourreaux (18).

4. Charrue semi-portée réversible selon la revendication 3, caractérisée en ce qu'elle comporte, disposé dans les fourreaux (18) un organe réglable (19) interposé entre la platine (13) et l'organe de rappel (17), ledit organe (19) étant réglable au moyen d'une vis (20).

5. Charrue semi-portée réversible selon l'une quelconque des revendications 2 à 4, caractérisée en ce qu'elle comporte des plots élastiques (17) disposés par paires de part et d'autre de l'axe d'articulation (16).

6. Charrue semi-portée réversible selon l'une quelconque des revendications 3 à 5, caractérisée en ce qu'elle comporte des moyens de verrouillage du tronçon arrière, en position transport.

7. Charrue semi-portée réversible selon la revendication 6, caractérisée en ce que les moyens de verrouillage du tronçon arrière (7), en position de transport, sont constitués d'une goupille interposée entre les oreilles (14) et (15) des chapes de liaison des deux tronçons (5) et (7).

## Claims

1. Extremely long semi-mounted plough comprising a longitudinal frame consisting of two sections : on the one hand a front section (5) arranged between the hitching system (2) of the plough onto the tractor, and a carriage (8), and on the other hand a rear section arranged beyond the said carriage (8), the said rear section (7) being supported by the front section (5) by means of an articulation device (11) consisting of an shaft (16) which is perpendicular to the direction of advance of the plough when it is in the normal working position, and an elastic return system being placed in between the front section (5) and the rear section (7), characterised in that the plough is two-way, the shaft is situated at the intersection of the mid planes of the front and rear sections, and the return system consists of members (17) arranged on either side of the said intersection comprising the articulation shaft (16), above and beneath the latter when the plough is in the normal working position, which return system tends to keep the said rear section (7) aligned with the said front section (5) whilst at the same time allowing the said rear section (7) a degree of freedom in the normal working position in a vertical plane, with respect to the said front section (5), so as to preserve a similar depth for all the shares (6), irrespective of the undulations of the land.

2. Two-way semi-mounted plough according to Claim 1, characterised in that the return members (17) are blocks made from a material of the rubber, elastomer type.

3. Two-way semi-mounted plough according to either of Claims 1 and 2, characterised in that it comprises return members (17) placed in between two plates (12) and (13) integral respectively with the front section (5) and with the rear section (7), which return members (17) are partially enclosed in sleeves (18).

4. Two-way semi-mounted plough according to Claim 3, characterised in that it comprises, arranged in the sleeves (18), an adjustable member (19) placed in between the plate (13) and the return member (17), the said member (19) being adjustable by means of a screw (20).

5. Two-way semi-mounted plough according to any one of Claims 2 to 4, characterised in that it comprises elastic blocks (17) arranged in pairs on either side of the articulation shaft (16).

6. Two-way semi-mounted plough according to any one of Claims 3 to 5, characterised in that it comprises means for locking the rear section in the transporting position.

7. Two-way semi-mounted plough according to Claim 6, characterised in that the means for locking the rear section (7) in the transporting position consist of a pin placed in between the lugs (14) and (15) of the fork joints linking the two sections (5) and (7).

## Patentansprüche

1. Lange Aufsattelpflüge mit einem langgestreckten Traggestell bestehend aus zwei Teilstücken : einerseits einem vorderen Teilstück (5), welches zwischen der Anhängevorrichtung des Pflugs am Traktor und einem Fahrgestell (8) angeordnet ist, und zum anderen ein rückwärtiges Teilstück (7), welches jenseits des Fahrgestells (8) angeordnet ist und das vom vorderen Teilstück (5) über eine Schwenkeinrichtung (11) gehalten wird, welche besteht aus einer Achse (16), die in der normalen Arbeitsposition senkrecht zur Vorwärtsbewegungsrichtung des Pflugs verläuft und einer Rückstellvorrichtung die zwischen dem vorderen Teilstück und dem hinteren Teilstück angeordnet ist, dadurch gekennzeichnet, daß der Pflug drehbar ist, daß die Achse im Schnitt der Mittelebenen der beiden Teilstücke angeordnet ist und daß die Rückstellvorrichtung aus Bauteilen (17) besteht, die beiderseits des genannten Schnitts angeordnet sind, und die Schwenkachse (16) enthalten, oberhalb und unterhalb der letzteren, wenn der Pflug in seiner normalen Arbeitsposition sich befindet, wobei die Rückstelleinrichtung dazu neigt, das rückwärtige Teilstück (7) in Ausrichtung mit dem vorderen Teilstück (5) zu halten, gleichzeitig aber in der normalen Arbeitsposition einen gewissen Bewegungsspielraum für das rückwärtige Teilstück (7) in einer vertikalen Ebene bezogen auf das vordere Teilstück (5) freihält, um auf diese Weise eine ähnliche Umpflügtiefe für die Gesamtheit der Pflugscharen (6) zu gewährleisten, unabhängig davon, wie die Bodenoberfläche gewellt ist.

2. Aufsatteldrehflug nach Anspruch 1, dadurch gekennzeichnet, daß die Rückstellbauteile (17) Steckerteile aus Kautschuk, elastomerem Kunstoff od.dgl. sind.

3. Aufsatteldrehflug nach Anspruch 1 oder 2, dadurch gekennzeichnet, daß er Rückstellbauteile (17) umfaßt, die zwischen zwei Platten (12 und 13) angeordnet sind, die starr mit dem vorderen Teilstück (5) und dem hinteren Teilstück (7) verbunden sind, wobei die Rückstellbauteile (17) teilweise von Stulpmanschetten (18) eingeschlossen sind.

4. Aufsatteldrehflug nach Anspruch 3, dadurch gekennzeichnet, daß er in den Stulpmanschetten (18) ein einstellbares Bauteil (19) umfaßt, welches zwischen der Platine (13) und dem Rückstellbauteil (17) angeordnet ist, wobei das Bauteil (19) mit Hilfe einer Schraube (20) einstellbar ist.

5. Aufsatteldrehflug nach einem der Ansprüche 2 bis 4, dadurch gekennzeichnet, daß er elastische Steckbauteile (17) umfaßt, die paarweise zu beiden Seiten der Schwenkachse (16) angeordnet sind.

6. Aufsatteldrehflug nach einem der Ansprüche 3 bis 5, gekennzeichnet durch Einrichtungen zur Verriegelung des rückwärtigen Teilstücks in der Transportstellung.

7. Aufsatteldrehflug nach Anspruch 6, dadurch gekennzeichnet, daß die Verriegelungseinrichtungen des rückwärtigen Teilstücks (7) in der Transportstellung aus einem Steckstift bestehen, der zwischen den Wangen (14) und (15) des Verbindungsgelenks der beiden Teilstücke (5) und (7) angeordnet ist.

_fig.1_

_fig.3_

_fig.2_

_fig.4_

EP 0 318 391 B1